# EUROPEAN PATENT APPLICATION

(11) **EP 4 231 570 A1**
(43) Date of publication of application: **23.08.2023**
(21) Application number: 21879316.4
(22) Date of filing: 11.10.2021
(51) Int. Cl.: H04L 5/00

(54) **CONFIGURATION METHOD FOR INFORMATION TRANSMISSION, AND ELECTRONIC DEVICE AND STORAGE MEDIUM**

(30) Priority: 16.10.2020 CN 202011112555
(71) Applicant: ZTE Corporation, Shenzhen, Guangdong 518057 (CN)
(72) Inventor: SHAO, Shijia, Shenzhen, Guangdong 518057 (CN); JIANG, Chuangxin, Shenzhen, Guangdong 518057 (CN); ZHANG, Yang, Shenzhen, Guangdong 518057 (CN); ZHANG, Shujuan, Shenzhen, Guangdong 518057 (CN); LU, Zhaohua, Shenzhen, Guangdong 518057 (CN)
(74) Representative: Regimbeau
(86) International application number: PCT/CN2021/122950
(87) International publication number: WO 2022/078271

(57) **Abstract**

Provided are a configuration method for information transmission, an electronic device and a storage medium. The configuration method for information transmission includes, in a case of continuously transmitting at least two times of downlink information, configuring a transmission interval K between downlink transmissions.

## Description

### TECHNICAL FIELD

The present application relates to the field of wireless communication, for example, a configuration method for information transmission, an electronic device and a storage medium.

### BACKGROUND

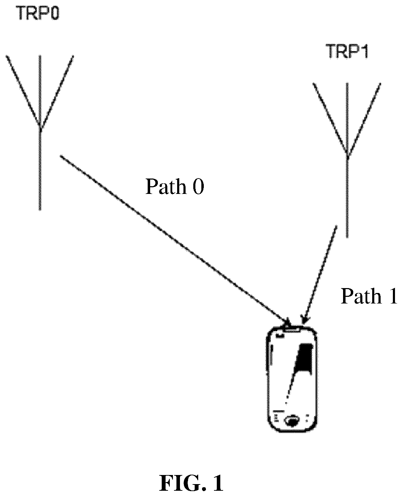

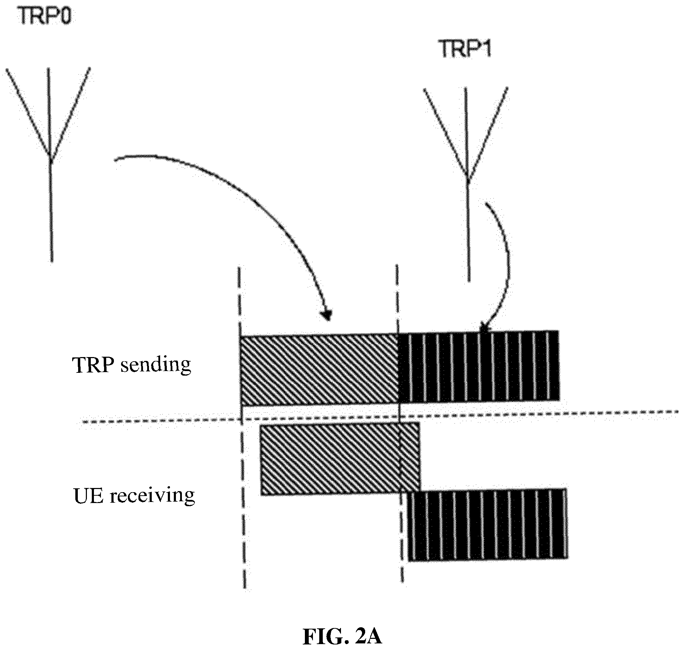

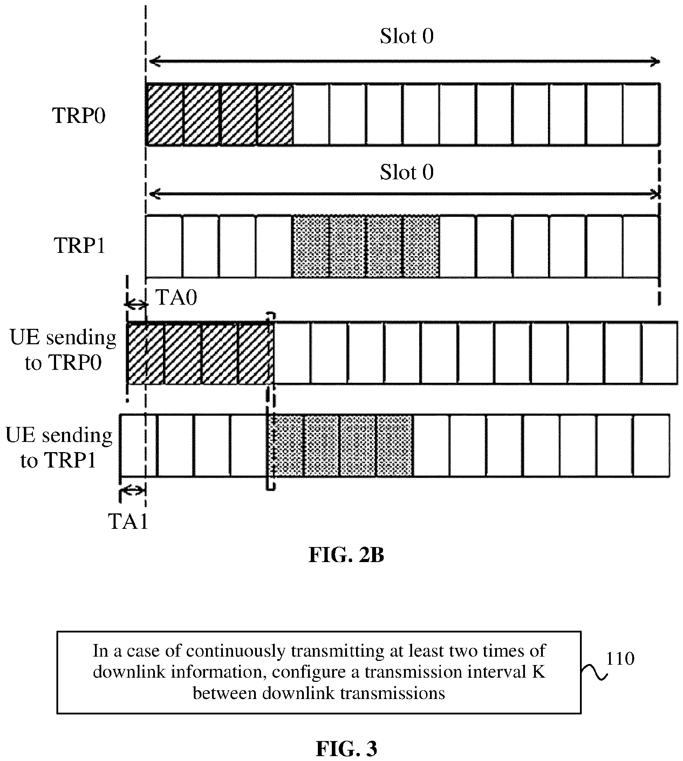

In the multiple-transmission and reception point (multi-TRP) joint transmission technology, the transmission throughput of the long term evolution-advanced (LTE-A) and new radio (NR) access technology is effectively improved by the application of multiple-transmission and reception point (TRP) transmissions to the long term evolution (LTE) in an enhanced mobile broadband (eMBB) scenario. Another technology of the NR is multi-panel transmission, which uses multiple antenna panels for transmission to obtain higher spectral efficiency. Moreover, the transmission reliability of a communication system must also be ensured. Sending or reception utilizing the multi-TRP or multi-panel can effectively reduce the probability of information blocking, thereby effectively improving the transmission reliability in an ultra-reliable low-latency communications (URLLC) scenario. However, in the related art, some problems are still to be solved in multiple transmissions in the multi-TRP or multi-panel. In the scenario of the multi-TRP, since positions of different TRPs are different with respect to a user equipment (UE), propagation paths are different. The diagram is shown in FIG. 1. When two TRPs send data separately, there is a delay in UE reception due to the problem of the propagation paths. When the transmission time from TRP0 to the UE is greater than that from TRP1 to the UE, there may be an overlap in data received by the UE, as shown in FIG. 2A. In FIG. 2A, the received delay of the UE is larger due to the relatively long propagation distance of TRP0, while the generated delay is smaller due to the relatively short propagation distance of TRP1. At this time, data of TRP0 and data of TRP1 overlap in the reception of the UE in the time domain, thereby affecting the reception of the UE. When the UE sends data to the two TRPs separately, due to different timing advances (TA) of different TRPs, the advance times of the UE for sending information to different TRPs are different, resulting in an overlap during UE uplink transmissions, as shown in FIG. 2B. In FIG. 2B, since TA0 corresponding to TRP0 is smaller, the information sent by the UE to TRP0 requires a smaller advance time, while TA1 corresponding to TRP1 is larger, and the information sent by the UE to TRP1 requires a larger advance time. For two pieces of information immediately adjacent at the TRP receiving side, there is an overlapping problem in the time domain at the UE sending end.

### SUMMARY

The present application provides a configuration method for information transmission, an electronic device and a storage medium, which aim at achieving a configuration method for information transmission with a low repetition rate in a multi-TRP scenario, thereby improving network communication quality.

Embodiments of the present application provide a configuration method for information transmission, which is applied to a first transmission node. The method includes, in a case of continuously transmitting at least two times of downlink information, a transmission interval K is configured between downlink transmissions.

Embodiments of the present application further provide a configuration method for information transmission, which is applied to a second transmission node. The method includes, in a case of continuously transmitting at least two times of uplink information, a transmission interval K is configured between uplink transmissions.

Embodiments of the present application also provide an electronic device. The electronic device includes one or more processors and a memory configured to store one or more programs. When executed by the one or more processors, the one or more programs cause the one or more processors to perform the configuration method for information transmission according to any embodiment of the present application.

Embodiments of the present application also provide a computer-readable storage medium storing a computer program which, when executed by a processor, causes the processor to perform the configuration method for information transmission according to any embodiment of the present application.

In the present application, when downlink data is transmitted multiple times, in a case of transmitting at least two times of information, the transmission interval K is configured between uplink or downlink transmissions. According to the transmission interval, the probability of data overlap is reduced during multiple transmissions in the multi-TRP scenario, communication interference is reduced, and the network quality of wireless communications can be enhanced.

### BRIEF DESCRIPTION OF DRAWINGS

FIG. 1 is an example diagram of a data propagation path according to an embodiment of the present application.
FIG. 2A is an example diagram of a data overlap according to an embodiment of the present application.
FIG. 2B is an example diagram of a data overlap according to an embodiment of the present application.
FIG. 3 is a flowchart of a configuration method for information transmission according to an embodiment of the present application.
FIG. 4 is an example diagram of a configuration method for information transmission according to an embodiment of the present application.
FIG. 5 is an example diagram of another configuration method for information transmission according to an embodiment of the present application.
FIG. 6 is an example diagram of another configuration method for information transmission according to an embodiment of the present application.
FIG. 7 is an example diagram of another configuration method for information transmission according to an embodiment of the present application.
FIG. 8 is an example diagram of another configuration method for information transmission according to an embodiment of the present application.
FIG. 9 is an example diagram of another configuration method for information transmission according to an embodiment of the present application.
FIG. 10 is an example diagram of a transmission interval K according to an embodiment of the present application.
FIG. 11 is an example diagram in which the information length is shortened according to an embodiment of the present application.
FIG. 12 is an example diagram in which another information length is shortened according to an embodiment of the present application.
FIG. 13 is an example diagram in which another information length is shortened according to an embodiment of the present application.
FIG. 14 is a flowchart of another configuration method for information transmission according to an embodiment of the present application.
FIG. 15 is an example diagram of another configuration method for information transmission according to an embodiment of the present application.
FIG. 16 is an example diagram of another configuration method for information transmission according to an embodiment of the present application.
FIG. 17 is an example diagram of another configuration method for information transmission according to an embodiment of the present application.
FIG. 18 is an example diagram of another configuration method for information transmission according to an embodiment of the present application.
FIG. 19 is an example diagram of another configuration method for information transmission according to an embodiment of the present application.
FIG. 20 is an example diagram of another configuration method for information transmission according to an embodiment of the present application.
FIG. 21 is an example diagram in which another information length is shortened according to an embodiment of the present application.
FIG. 22 is an example diagram in which another information length is shortened according to an embodiment of the present application.
FIG. 23 is a diagram illustrating the structure of a configuration method apparatus for information transmission according to an embodiment of the present application.
FIG. 24 is a diagram illustrating the structure of another configuration method apparatus for information transmission according to an embodiment of the present application.
FIG. 25 is a diagram illustrating the structure of an electronic device according to an embodiment of the present application.

### DETAILED DESCRIPTION

Suffixes such as "module", "component" or "unit" used for indicating elements in the subsequent description are used merely for facilitating the description of the present application and have no particular meaning in themselves. Therefore, "module", "component" or "unit" may be used in a mixed manner.

FIG. 3 is a flowchart of a configuration method for information transmission according to an embodiment of the present application. This embodiment of the present application is applied to the case where downlink data is transmitted multiple times. The method may be performed by the configuration apparatus for information transmission in this embodiment of the present application. This apparatus may be implemented in software and/or hardware and is generally integrated in a first transmission node, for example, a base station. Referring to FIG. 3, the method provided by this embodiment of the present application includes the following.

In 110, in a case where downlink information is continuously transmitted at least two times, a transmission interval K is configured between downlink transmissions.

The downlink information may be data or control information sent by the first transmission node to a second transmission node, for example, data or indication information sent by the base station to the user side in the NR. The transmission interval K may be a transmission interval between downlink transmissions. The transmission interval may include a symbol, time or the like.

In this embodiment of the present application, when multiple downlink transmissions are performed, a transmission interval may be configured so that downlink data transmitted multiple times does not overlap during transmissions. The transmission interval K may be a preset fixed value or an interval value determined according to the network state.

In this embodiment of the present application, when the downlink data is transmitted multiple times, the transmission interval K for transmitting the downlink data is configured so that the downlink transmissions are sent according to the transmission interval K. According to the transmission interval, the probability of overlap is reduced during multiple transmissions in the multi-TRP scenario, the communication interference is reduced, and the network quality of wireless communications can be enhanced.

Two application scenarios are included in the NR scenario, namely, a single-downlink control information (S-DCI) scenario and a multiple-downlink control information (M-DCI) scenario.

On the basis of the preceding embodiment of the present application, configuring the transmission interval K between downlink transmissions includes the following: In the single-downlink control information scenario, the transmission interval K is configured between every two downlink transmissions.

In this embodiment of the present application, the transmission interval K may be configured between every two downlink transmissions.

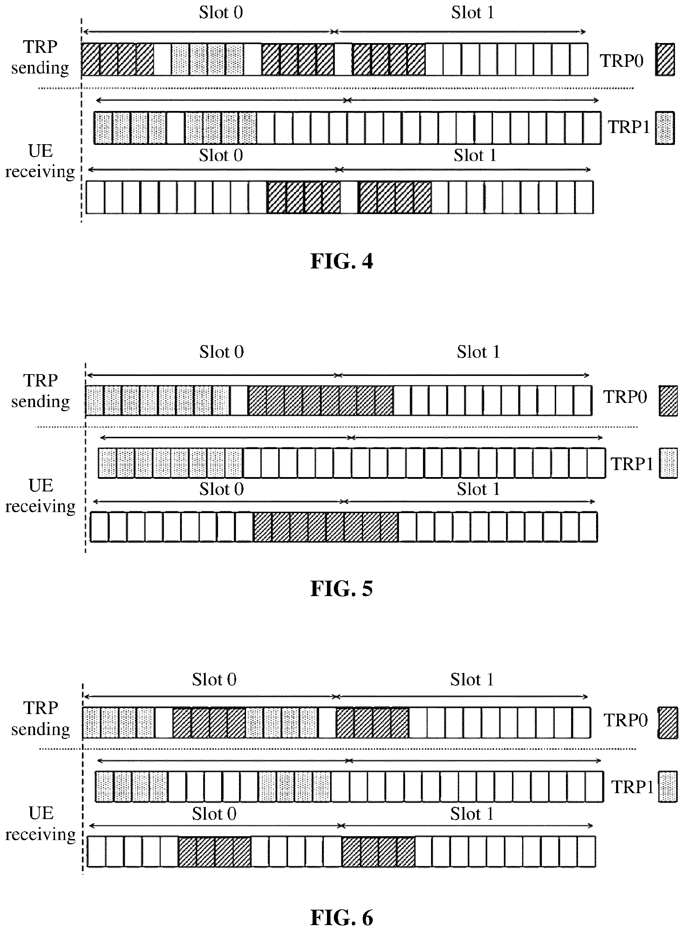

For example, FIG. 4 is an example diagram of a configuration method for information transmission according to an embodiment of the present application. Referring to FIG. 4, when K is an orthogonal frequency division multiplexing (OFDM) symbol, the lengths of data sent by two TRPs are 4 OFDM symbols each and the data sent by two TRPs is repeatedly transmitted four times in a cycle. The transmission delay of TRP0 is smaller than that of TRP1. The sending starts from TRP1. The first transmission comes from symbols 0 to 3 occupied by TRP1 in slot 0. The second transmission comes from symbols 5 to occupied by TRP1 8 in slot 0. The third transmission comes from symbols 10 to 13 occupied by TRP0 in slot 0. The fourth transmission comes from symbols 1 to 4 occupied by TRP0 in slot 1.

On the basis of the preceding embodiments of the present application, configuring the transmission interval K between each downlink transmission includes the following: In the single-downlink control information scenario, the transmission interval K is configured between two downlink transmissions where switching of a TRP or a transmission configuration indicator (TCI) state occurs.

The transmission interval K is configured only between two downlink transmissions where the switching of the TRP or the TCI state occurs. For example, after downlink transmission a is executed, the switching of a TRP or a TCI occurs, then downlink transmission b is executed, and the transmission interval K is configured between downlink transmission a and downlink transmission b.

In an example embodiment, FIG. 5 is an example diagram of another configuration method for information transmission according to an embodiment of the present application. Referring to FIG. 5, when downlink data is repeatedly transmitted multiple times, the base station configures the transmission interval K for the downlink transmissions, which is used between two transmissions where switching of the TRP/TCI occurs. When K is an OFDM symbol, the lengths of data sent by two TRPs are 4 OFDM symbols each and the data sent by two TRPs is repeatedly transmitted four times in a cycle. The transmission delay of TRP0 is smaller than that of TRP1. The sending starts from TRP1. The first transmission comes from symbols 0 to 3 occupied by TRP1 in slot 0. The second transmission comes from symbols 4 to 7 occupied by TRP1 in slot 0. The third transmission comes from symbols 9 to 12 occupied by TRP0 in slot 0. The fourth transmission comes from symbol 13 in slot 0 and symbols 1 to 2 in slot 1 which are occupied by TRP0.

On the basis of the preceding embodiments of the present application, configuring the transmission interval K between downlink transmissions includes the following: In the single-downlink control information scenario, the transmission interval K is configured after a downlink transmission sent by a target TRP and between two downlink transmissions where switching of a TRP or a TCI state occurs.

The target TRP may be a selected TRP, a TRP selected according to a configuration parameter, or a TRP satisfying a transmission delay condition.

In this embodiment of the present application, the transmission interval K may be configured between two downlink transmissions where the switching of a TRP or a TCI state occurs and is configured only after the downlink transmission of the target TRP. For example, it is determined whether the switching of the TRP or the TCI state occurs in the next transmission after the downlink transmission of the target TRP. If so, the transmission interval K is configured after the downlink transmission, and if not, the transmission interval K is not configured.

On the basis of the preceding embodiments of the present application, the target TRP has the maximum transmission delay among multiple TRPs. The value of the transmission interval K is associated with at least one of the following information: the TCI state of the target TRP or a target timing advance. The target timing advance corresponds to the maximum timing advance value among the TRPs.

The timing advance may be information used for indicating the sending time of the downlink data.

In an example embodiment, FIG. 6 is an example diagram of another configuration method for information transmission according to an embodiment of the present application. Referring to FIG. 6, when K is an OFDM symbol, the lengths of data of two TRPs are 4 OFDM symbols each and the data of two TRPs is alternately and repeatedly transmitted four times. The transmission delay of TRP0 is smaller than that of TRP1. The transmission starts from TRP1. The first transmission comes from symbols 0 to 4 occupied by TRP1 in slot 0, and symbol 4 is configured as the transmission interval. The second transmission comes from symbols 5 to 8 occupied by TRP0 in slot 0. The third transmission comes from symbols 9 to 13 in slot 0 occupied by TRP1, and symbol 13 is configured as the transmission interval. The fourth transmission comes from symbols 0 to 3 occupied by TRP0 in slot 1.

On the basis of the preceding embodiments of the present application, configuring the transmission interval K between downlink transmissions includes the following: In the single-downlink control information scenario, the transmission interval K is configured before a downlink transmission sent by a target TRP and between two downlink transmissions where switching of a TRP or a TCI state occurs.

In this embodiment of the present application, the transmission interval K may be configured between two downlink transmissions where the switching of a TRP or a TCI state occurs and is configured only before the downlink transmission of the target TRP. For example, it is determined whether the switching of a TRP or TCI state occurs in the downlink transmission of the target TRP compared to the previous downlink transmission. If so, the transmission interval K is configured before the downlink transmission, and if not, the transmission interval K is not configured.

On the basis of the preceding embodiments of the present application, the target TRP has the minimum transmission delay among multiple TRPs. The value of the transmission interval K is associated with at least one of the following information: the TCI state of the target TRP or a target timing advance. The target timing advance corresponds to the minimum timing advance value among the TRPs.

For example, FIG. 6 is an example diagram of another configuration method for information transmission according to an embodiment of the present application. Referring to FIG. 6, when K is an OFDM symbol, the lengths of data of two TRPs are 4 OFDM symbols each and the data of each TRP is alternately and repeatedly transmitted four times. The transmission delay of TRP0 is smaller than that of TRP 1. The sending starts from TRP1. The first transmission comes from symbols 0 to 3 occupied by TRP1 in slot 0. The second transmission comes from symbols 4 to 8 occupied by TRP0 in slot 0, and symbol 4 is configured as the transmission interval. The third transmission comes from symbols 9 to 12 occupied by TRP1 in slot 0. The fourth transmission comes from symbol 13 in slot 0 and symbols 0 to 3 in slot 1 which are occupied by TRP0, and symbol 13 is configured as the transmission interval.

On the basis of the preceding embodiment of the present application, configuring the transmission interval K between downlink transmissions includes the following: When two downlink transmissions are performed in the single-downlink control information scenario, a downlink transmission with a smaller transmission delay in the two downlink transmissions is configured to be sent before a downlink transmission with a larger transmission delay in the two downlink transmissions.

When two downlink transmissions are performed, information of the downlink transmissions may be the same or different. When the transmission sequence of the downlink transmissions is configured, the downlink transmission with the smaller transmission delay is sent before the downlink transmission with the larger transmission delay. When the downlink information of the two downlink transmissions is different, the data with the smaller transmission delay is sent first, and the data with the larger transmission delay is sent later. In this case, the transmission interval K does not need to be configured.

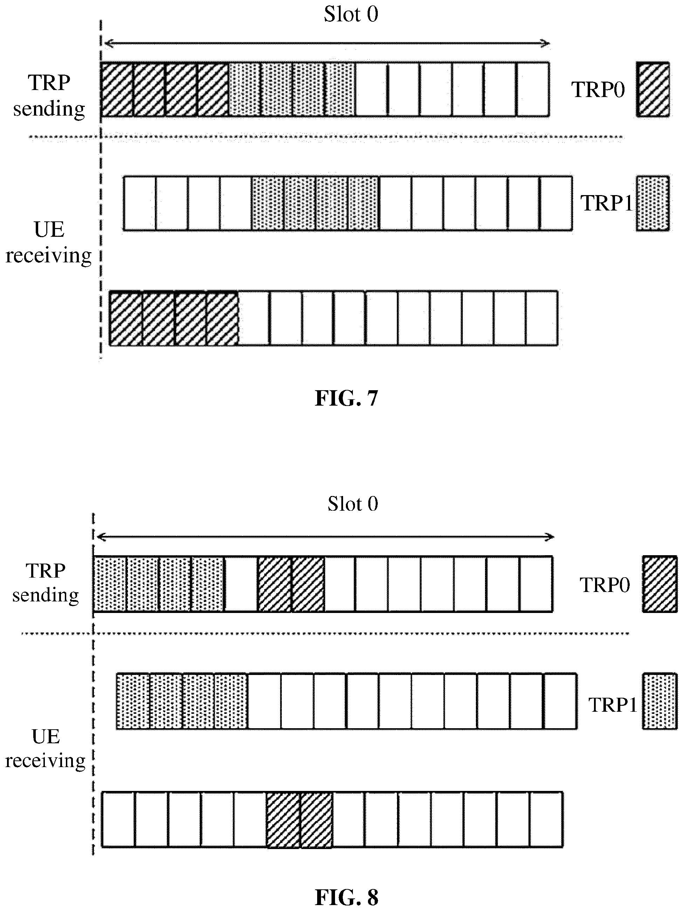

For example, FIG. 7 is an example diagram of another configuration method for information transmission according to an embodiment of the present application. Referring to FIG. 7, the lengths of data of two TRPs are 4 OFDM symbols each. The transmission content is the same or different. The transmission delay of TRP0 is smaller than that of TRP1. The sending starts from TRP0. The data of TRP0 occupies symbols 0 to 3 in slot 0. The data of TRP1 occupies symbols 4 to 7 in slot 0. No overlap occurs in the data of the two TRPs when the UE receives the data.

When the backhaul between cooperative TRPs is not ideal, the backhaul delay between cooperative TRPs is slightly large. Since the interaction of two TRPs may have a delay, it is relatively difficult to share one physical downlink control channel (PDCCH). Therefore, the scheduling of the two TRPs may be performed relatively independently. The scheduling of two TRPs is independent, and each TRP sends DCI to schedule data. This method is called multi-TRP of multi-downlink control information (Multi-DCI, M-DCI).

On the basis of the preceding embodiments of the present application, configuring the transmission interval K between downlink transmissions includes, in the multi-downlink control information scenario, the transmission interval K is configured before a downlink transmission of a target TRP and between two downlink transmissions where switching of a TRP or a TCI state occurs.

In this embodiment of the present application, the transmission interval K may be configured between two downlink transmissions where the switching of a TRP or a TCI state occurs and is configured only before the downlink transmission of the target TRP. For example, it is determined whether the switching of a TRP or TCI state occurs in the downlink transmission of the target TRP compared to the previous transmission. If so, the transmission interval K is configured before the downlink transmission, and if not, the transmission interval K is not configured.

On the basis of the preceding embodiments of the present application, the target TRP has the minimum transmission delay among multiple TRPs. The value of the transmission interval K is associated with at least one of the following information: the TCI state of the target TRP, the target timing advance value, or a target higher-layer parameter, a control resource set pool index (CORESTPoolIndex). The target timing advance corresponds to the minimum timing advance value among the TRPs. The target higher-layer parameter is a CORESTPoolIndex value corresponding to the TRP having the minimum transmission delay among the TRPs.

In an example embodiment, FIG. 8 is an example diagram of another configuration method for information transmission according to an embodiment of the present application. Referring to FIG. 8, when K is an OFDM symbol, the length of data of TRP1 is 4 OFDM symbols, and the length of data of TRP0 is 2 OFDM symbols. The transmission delay of TRP0 is smaller than that of TRP 1. The sending starts from TRP1. The data of TRP 1 occupies symbols 0 to 3 in slot 0. The data of TRP1 occupies symbols 4 to 6 in slot 0, and symbol 4 is configured as the transmission interval.

On the basis of the preceding embodiments of the present application, configuring the transmission interval K between downlink transmissions includes the following: In the multi-downlink control information scenario, the transmission interval K is configured after a downlink transmission of a target TRP and between two downlink transmissions where switching of a TRP or a TCI state occurs.

In this embodiment of the present application, the transmission interval K may be configured between two downlink transmissions where the switching of a TRP or a TCI state occurs and is configured only after the downlink transmission of the target TRP. For example, it is determined whether the switching of a TRP or a TCI state occurs in the next transmission after the downlink transmission of the target TRP. If so, the transmission interval K is configured after the downlink transmission, and if not, the transmission interval K is not configured.

On the basis of the preceding embodiments of the present application, the target TRP has the maximum transmission delay among multiple TRPs. The value of the transmission interval K is associated with at least one of the following information: the TCI state of the target TRP, the target timing advance, or a target higher-layer parameter CORESTPoolIndex. The target timing advance corresponds to the maximum timing advance value among the TRPs. The target higher-layer parameter is a CORESTPoolIndex value corresponding to the TRP having the maximum transmission delay among the TRPs.

In an example embodiment, FIG. 8 is an example diagram of another configuration method for information transmission according to an embodiment of the present application. Referring to FIG. 8, when K is an OFDM symbol, the length of data of TRP1 is 4 OFDM symbols, and the length of data of TRP0 is 2 OFDM symbols. The transmission delay of TRP0 is larger than that of TRP1. The sending starts from TRP1. The data of TRP1 occupies symbols 0 to 4 in slot 0, and symbol 4 is configured as the transmission interval. The data of TRP0 occupies symbols 5 to 6 in slot 0.

On the basis of the preceding embodiments of the present application, configuring the transmission interval K between downlink transmissions includes the following: When two downlink transmissions are performed in the multi-downlink control information scenario, a downlink transmission with a smaller transmission delay in the two downlink transmissions is configured to be sent before a downlink transmission with a larger transmission delay in the two downlink transmissions.

When two downlink transmissions are performed, downlink information of the two downlink transmissions may be the same or different. When the transmission sequence of the downlink transmissions is configured, the downlink transmission with the smaller transmission delay is sent before the other downlink transmission with the larger transmission delay. In this case, the transmission interval K need not be configured.

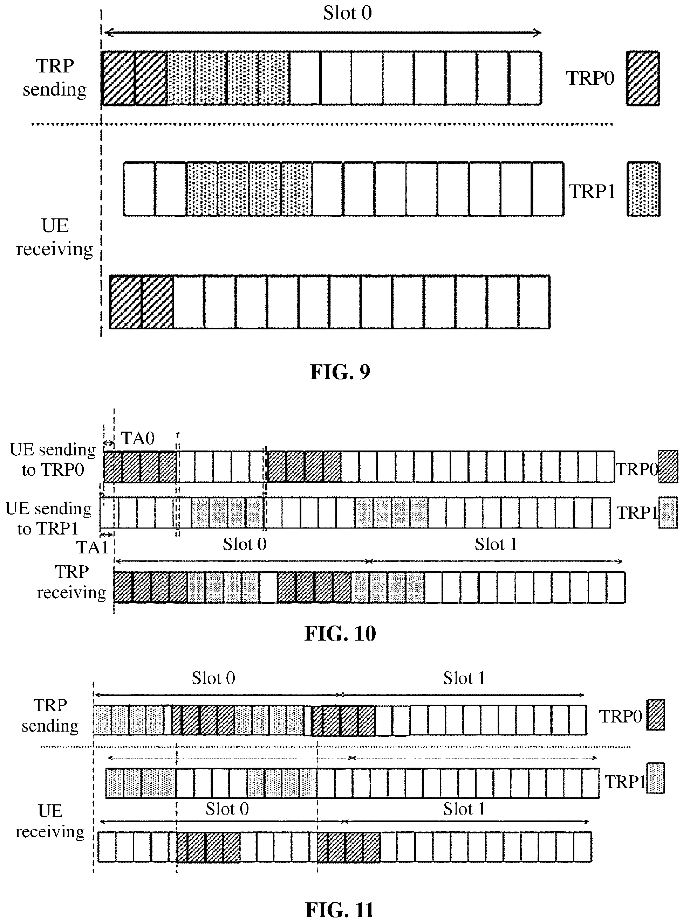

For example, referring to FIG. 9, when K is an OFDM symbol, the length of data of TRP1 is 4 OFDM symbols, and the length of data of TRP0 is 2 OFDM symbols. The transmission delay of TRP0 is smaller than that of TRP1. The sending starts from TRP0. The data of TRP0 occupies symbols 0 to 1 in slot 0. The data of TRP1 occupies symbols 2 to 5 in slot 0. The transmission interval K is not configured between TRP0 and TRP1, and no overlap occurs when the UE receives the data of the two TRPs.

On the basis of the preceding embodiments of the present application, configuring the transmission interval K between downlink transmissions includes the following: When at least two downlink transmissions are performed in the multi-downlink control information scenario, downlink transmissions from two TRPs are not configured to be sent immediately adjacently.

In this embodiment of the present application, when downlink transmissions from two TRPs are performed, an interval is configured between downlink transmissions from different TRPs, and the downlink transmissions are not sent immediately adjacently.

On the basis of the preceding embodiments of the present application, the transmission interval K is an interval time or the number of interval symbols determined according to the timing advance value or the transmission delay.

The unit of the transmission interval K may be an interval time or a transmission symbol. The value of the transmission interval K may be determined by the timing advance value.

For example, FIG. 10 is an example diagram of a transmission interval K according to an embodiment of the present application. Referring to FIG. 10, when the transmission interval K is the interval time, the base station calculates the interval time T according to the timing advance value, that is, T = |TA1 - TA0|, and indicates the interval time as the transmission interval, namely, K = T. As shown in FIG. 10, the UE maintains two time axes corresponding to TRP0 and TRP1 at the same time. When TRP0 with the small transmission delay is switched to TRP1 with the large transmission delay, the sending start symbol corresponding to TRP1 is as follows: the end symbol of the last sending of TRP0 plus T corresponding to the closest symbol on the time axis of TRP1. Time axis 1 (the time axis corresponding to the sending of the UE to TRP0) completes the first sending at symbols 0 to 3. Symbol (3 + T) corresponds to symbol 4 of time axis 2 (the time axis corresponding to the sending of the UE to TRP1). Therefore, the symbols of the second sending start from symbol 5 on time axis 2.

In another example embodiment, the base station calculates the interval time T according to the timing advance value, T = |TA1 - TA0|, determines the required number K of interval OFDM symbols based on the interval time T, and indicates the number K of interval symbols to the UE. K is rounded up from the symbol duration by the interval time T.

On the basis of the preceding embodiments of the present application, when at least two downlink transmissions are performed, the transmission interval K is not configured, and if an overlap occurs during the reception of the second transmission node, the information length of a downlink transmission which is of the first transmission node and where an overlapping part occurs is shortened.

When the first transmission node performs at least two continuous downlink transmissions, if the transmission interval K is not configured in the first transmission node, the first transmission node may determine whether an overlap occurs in the uplink transmissions received by the second transmission node. If it is determined that the uplink transmission overlap may occur, the information length of the downlink transmission where the overlapping part occurs and which is of the first transmission node as the sending end is shortened.

In this embodiment of the present application, when data sent in the first transmission node overlaps due to different transmission paths, shortening the length of data in the overlapping part may be considered. For example, the information length of one of downlink transmissions in the overlapping part may be randomly shortened, and the information length of the other downlink transmission is reserved.

On the basis of the preceding embodiments of the present application, shortening the information length of the downlink transmission in a part where the overlap occurs includes at least one of the following: The information length of the latter downlink transmission transmitted in two transmissions where the overlapping part exists is shortened; the information length of the former downlink transmission in the two transmissions where the overlapping part exists is shortened; the information length of a downlink transmission having a lower priority in the two transmissions where the overlapping part exists is shortened; or the information lengths of downlink transmissions where the overlapping part exists and that are of different TRPs are shortened alternately.

In this embodiment of the present application, the information length of the latter downlink transmission transmitted in the two overlapping transmissions may be shortened, and the length of the previously sent downlink transmission is not changed. FIG. 11 is an example diagram in which the information length is shortened according to an embodiment of the present application.

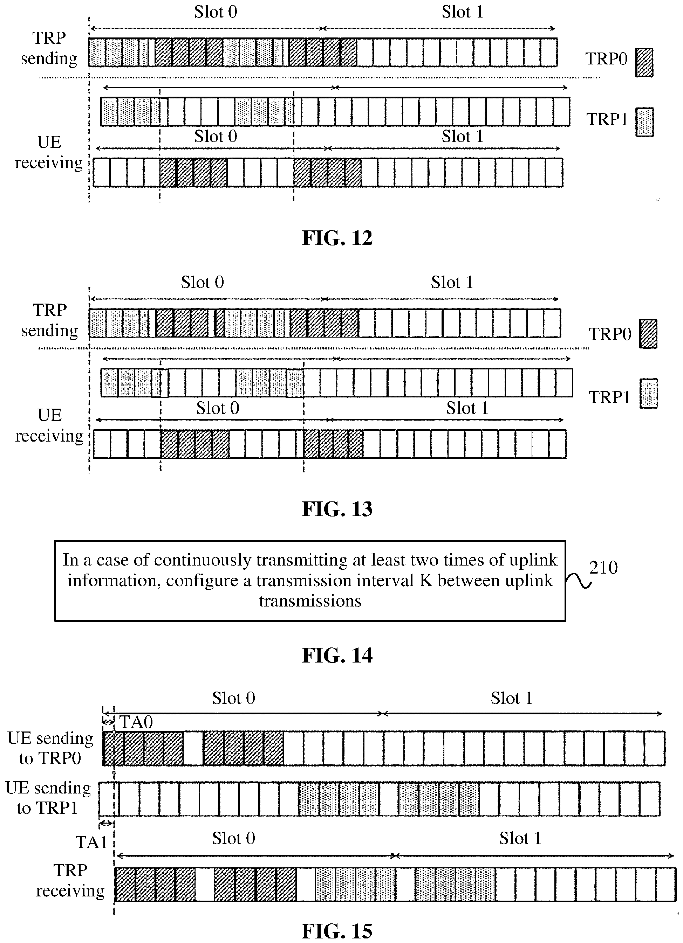

Referring to FIG. 11, TRP1 sends the downlink transmission before TRP0 and the information length of the downlink transmission of TRP0 is shortened. Alternatively, the information length of the former downlink transmission transmitted in the two overlapping transmissions may be shortened. FIG. 12 is an example diagram in which the information length is shortened according to an embodiment of the present application. Referring to FIG. 12, TRP1 sends the downlink transmission before TRP0 and the information length of the downlink transmission of TRP1 is shortened. Alternatively, shortening may be performed according to the priority. For example, if the primary TRP is TRP0, the priority of the downlink information sent by TRP0 is relatively high. It may be considered to shorten the information length of the downlink transmission corresponding to the secondary TRP (TRP1), that is, the overlapping symbols corresponding to TRP1 are shortened, referring to FIG. 12. Alternatively, the information lengths of downlink transmissions where the overlapping part exists and that are of different TRPs may be shortened alternately. An overlap exists between TRP1 and TRP0. When the overlap occurs for the first time, the information length of the downlink transmission of TRP1 is shortened, and TRP0 transmits the information normally. When the overlap occurs for the second time, TRP1 transmits the information normally, and the information length of the downlink transmission of TRP0 is shortened, referring to FIG. 13.

FIG. 14 is a flowchart of another configuration method for information transmission according to an embodiment of the present application. This embodiment of the present application is applied to the case where uplink data is transmitted multiple times. The method may be performed by a configuration apparatus for information transmission in this embodiment of the present application. This apparatus may be implemented in software and/or hardware and is generally integrated in the second transmission node, for example, a UE. Referring to FIG. 14, the method provided by this embodiment of the present application includes the following.

In 210, in a case where uplink information is continuously transmitted at least two times, a transmission interval K is configured between uplink transmissions.

The uplink information may be data or control information sent by the second transmission node to the first transmission node, for example, the data or indication information sent from the user side to the base station in the NR. The transmission interval K may be a transmission interval between uplink transmissions. The transmission interval may include a symbol, time, or the like.

In this embodiment of the present application, when multiple uplink transmissions are performed, a transmission interval may be configured so that uplink data transmitted each time does not overlap during the transmissions. The transmission interval K may be a preset fixed value or an interval value determined according to the network state.

In this embodiment of the present application, when uplink data is transmitted multiple times, the transmission interval K for transmitting the uplink data is configured, and the transmission interval K is used for multiple uplink transmissions. According to the transmission interval, the probability of overlap is reduced during multiple data transmissions in the multi-TRP scenario, the communication interference is reduced, and the network quality of wireless communications can be enhanced.

Two application scenarios are included in the NR scenario, namely, the single-downlink control information (S-DCI) scenario and the multiple-downlink control information (M-DCI) scenario.

On the basis of the preceding embodiment of the present application, configuring the transmission interval K between uplink transmissions includes the following: In the single-downlink control information scenario, the transmission interval K is configured between every two uplink transmissions.

In this embodiment of the present application, the transmission interval K is configured between every two uplink transmissions.

For example, FIG. 15 is an example diagram of another configuration method for information transmission according to an embodiment of the present application. Referring to FIG. 15, when K is an OFDM symbol, the lengths of uplink data sent to two TRPs are 4 OFDM symbols each and the uplink data sent to two TRPs is repeatedly transmitted four times in a cycle. TA0 corresponding to TRP0 is smaller than TA1 corresponding to TRP1. The first uplink transmission is sent to TRP0 and occupies symbols 0 to 3 in slot 0. The second uplink transmission is sent to TRP0 and occupies symbols 5 to 8 in slot 0. The third transmission is sent to TRP1 and occupies symbols 10 to 13 in slot 0. The fourth transmission is sent to TRP1 and occupies symbols 1 to 4 in slot 1.

On the basis of the preceding embodiment of the present application, configuring the transmission interval K between uplink transmissions includes the following: In the single-downlink control information scenario, the transmission interval K is configured between two uplink transmissions where switching of a receiving TRP or a sending beam occurs.

The transmission interval K is configured only between two uplink transmissions where the switching of a receiving TRP or a sending beam occurs. For example, after uplink transmission a is executed, the switching of a receiving TRP or a sending beam occurs, then uplink transmission b is executed, and the transmission interval K is configured between uplink transmission a and uplink transmission b.

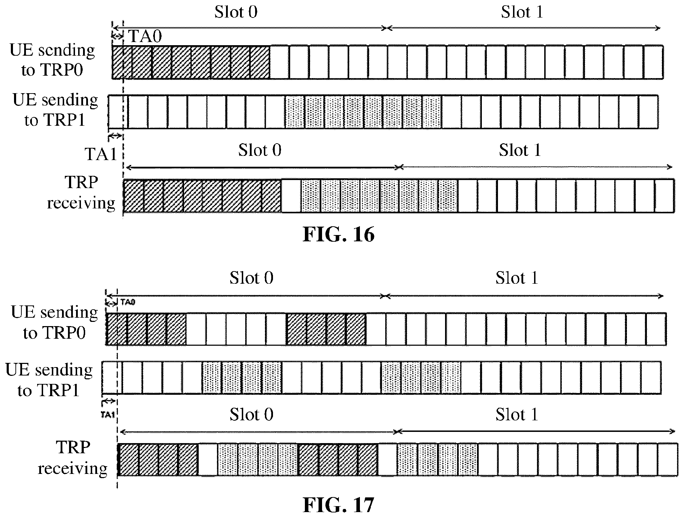

In an example embodiment, FIG. 16 is an example diagram of a configuration method for information transmission according to an embodiment of the present application. Referring to FIG. 16, when K is an OFDM symbol, the lengths of uplink data sent to two TRPs are 4 OFDM symbols each and the uplink data sent to two TRPs is repeatedly transmitted four times sequentially. TA0 corresponding to TRP0 is smaller than TA1 corresponding to TRP1. The first uplink transmission is sent to TRP0 and occupies symbols 0 to 3 in slot 0. The second uplink transmission is sent to TRP0 and occupies symbols 4 to 7 in slot 0. The third transmission is sent to TRP1 and occupies symbols 9 to 12 in slot 0. The fourth transmission is sent to TRP1 and occupies symbol 13 in slot 0 and symbols 0 to 2 in slot 1.

On the basis of the preceding embodiments of the present application, configuring the transmission interval K between uplink transmissions includes the following: In a single-downlink control information scenario, the transmission interval K is configured after an uplink transmission sent to a target TRP and between two uplink transmissions where switching of a receiving TRP or a sending beam occurs.

The target TRP may be a selected TRP, a TRP selected according to a configuration parameter, or a TRP satisfying a transmission delay condition.

In this embodiment of the present application, the transmission interval K may be configured between two uplink transmissions where the switching of a receiving TRP or a sending beam occurs and is configured only after the uplink transmission sent to the target TRP. For example, it is determined whether the switching of a receiving TRP or a sending beam occurs in the next transmission after the uplink transmission sent to the target TRP. If so, the transmission interval K is configured after the uplink transmission, and if not, the transmission interval K is not configured.

On the basis of the preceding embodiments of the present application, the target TRP has the minimum timing advance among multiple TRPs. The value of the transmission interval K is associated with at least one of the following information: a sending beam of the target TRP or a target timing advance. The target timing advance corresponds to the minimum timing advance value among the TRPs.

In an example embodiment, when K is an OFDM symbol, the lengths of data sent to two TRPs are 4 OFDM symbols each and the data sent to two TRPs is alternately and repeatedly transmitted four times. TA0 corresponding to TRP0 is smaller than TA1 corresponding to TRP1. As shown in FIG. 17, the first uplink transmission is sent to TRP0 and occupies symbols 0 to 4 in slot 0, where symbol 4 is configured as the transmission interval and not used for data transmission. The second uplink transmission is sent to TRP1 and occupies symbols 5 to 8 in slot 0. The third uplink transmission is sent to TRP0 and occupies symbols 9 to 13 in slot 0, where symbol 13 is configured as the transmission interval and not used for data transmission. The fourth uplink transmission is sent to TRP1 and occupies symbols 0 to 3 in slot 1.

On the basis of the preceding embodiments of the present application, configuring the transmission interval K between uplink transmissions includes the following: In the single-downlink control information scenario, the transmission interval K is configured before an uplink transmission sent to a target TRP and between two uplink transmissions where switching of a receiving TRP or a sending beam occurs.

In this embodiment of the present application, the transmission interval K may be configured between two uplink transmissions where the switching of a receiving TRP or a sending beam occurs and is configured only before the uplink transmission sent to the target TRP. For example, it is determined whether the switching of a receiving TRP or a sending beam occurs in the uplink transmission sent to the target TRP compared to the previous transmission. If so, the transmission interval K is configured before the uplink transmission, and if not, the transmission interval K is not configured.

On the basis of the preceding embodiments of the present application, the target TRP has the maximum timing advance among multiple TRPs. The value of the transmission interval K is associated with at least one of the following information: a sending beam of the target TRP or a target timing advance. The target timing advance corresponds to the maximum timing advance value among the TRPs.

In an example embodiment, FIG. 17 is an example diagram of another configuration method for information transmission according to an embodiment of the present application. Referring to FIG. 17, when K is an OFDM symbol, the lengths of data sent to two TRPs are 4 OFDM symbols each and the data sent to two TRPs is repeatedly and alternately transmitted four times. TA0 corresponding to TRP0 is smaller than TA1 corresponding to TRP1. The first uplink transmission is sent to TRP0 and occupies symbols 0 to 3 in slot 0. The second uplink transmission is sent to TRP1 and occupies symbols 4 to 8 in slot 0, where symbol 4 is configured as the transmission interval and not used for data transmission. The third transmission is sent to TRP0 and occupies symbols 9 to 12 in slot 0. The fourth transmission is sent to TRP1 and occupies symbol 13 in slot 0 and symbols 0 to 3 in slot 1, where symbol 13 is configured as the transmission interval and not used for data transmission.

On the basis of the preceding embodiments of the present application, configuring the transmission interval K between uplink transmissions includes the following: when two uplink transmissions are performed in the single-downlink control information scenario, an uplink transmission with a larger timing advance in the two uplink transmissions is configured to be sent before an uplink transmission with a smaller timing advance in the two uplink transmissions.

When two uplink transmissions are performed, uplink data of the two uplink transmissions may be the same or different. When the transmission sequence of the uplink transmissions is configured, the first uplink transmission with the larger timing advance is sent before the second uplink transmission with the smaller timing advance. When the uplink data of the two uplink transmissions is different, data with the larger timing advance is sent first, and data with the smaller timing advance is sent later. In this case, the transmission interval K does not need to be configured.

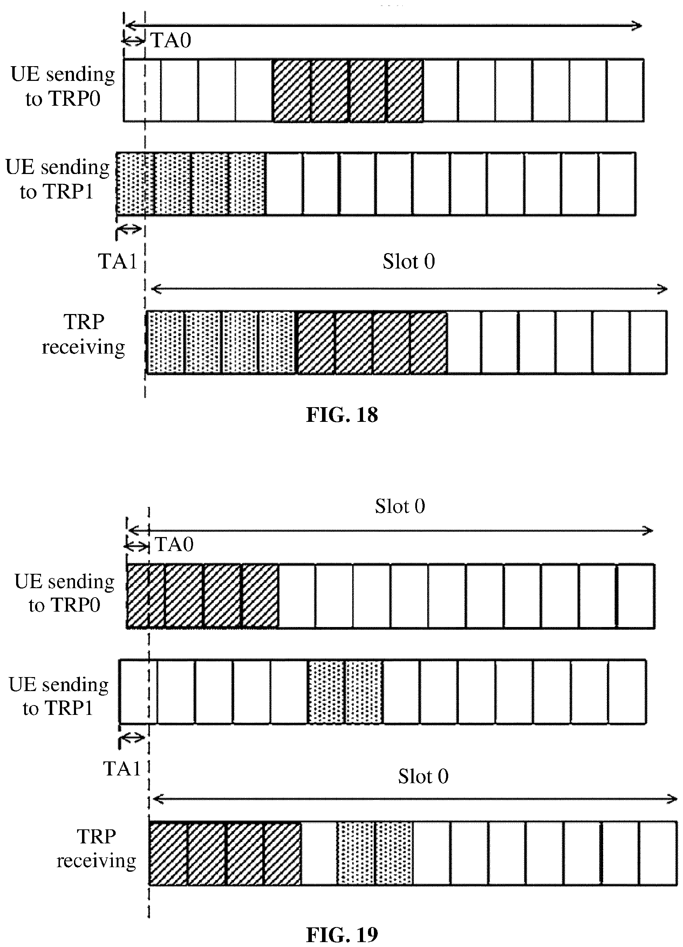

For example, FIG. 18 is an example diagram of another configuration method for information transmission according to an embodiment of the present application. Referring to FIG. 18, the lengths of data sent to two TRPs are 4 OFDM symbols each. The transmission content is the same or different. TA0 corresponding to TRP0 is smaller than TA1 corresponding to TRP1. The data of TRP1 is sent first, the data sent to TRP1 occupies symbols 0 to 3 in slot 0. The data sent to TRP0 occupies symbols 4 to 7 in slot 0. No overlap occurs when the UE sends the data to the two TRPs.

On the basis of the preceding embodiments of the present application, configuring the transmission interval K between uplink transmissions includes the following: In the multi-downlink control information scenario, the transmission interval K is configured before an uplink transmission sent to a target TRP and between two uplink transmissions where switching of a receiving TRP or a sending beam occurs.

In this embodiment of the present application, the transmission interval K may be configured between two uplink transmissions where the switching of a receiving TRP or a sending beam occurs and is configured only before the uplink transmission sent to the target TRP. For example, it is determined whether the switching of a receiving TRP or a sending beam occurs in the uplink transmission sent to the target TRP compared to the previous transmission. If so, the transmission interval K is configured before the uplink transmission, and if not, the transmission interval K is not configured.

On the basis of the preceding embodiments of the present application, the target TRP has the maximum timing advance among multiple TRPs. The value of the transmission interval K is associated with at least one of the following information: the TCI state of the target TRP, the target timing advance, or a target higher-layer parameter CORESTPoolIndex. The target timing advance corresponds to the maximum timing advance value among the TRPs. The target higher-layer parameter is a CORESTPoolIndex value corresponding to the TRP having the maximum transmission delay among the receiving TRPs.

For example, FIG. 19 is an example diagram of another configuration method for information transmission according to an embodiment of the present application. Referring to FIG. 19, when K is an OFDM symbol, the length of data sent to TRP0 is 4 OFDM symbols, and the length of data sent to TRP1 is 2 OFDM symbols. TA0 corresponding to TRP0 is smaller than TA1 corresponding to TRP1. The first uplink transmission is sent to TRP0 and occupies symbols 0 to 3 in slot 0. The second uplink transmission is sent to TRP1 and occupies symbols 4 to 6 in slot 0, and symbol 4 is configured as the transmission interval.

On the basis of the preceding embodiments of the present application, configuring the transmission interval K between uplink transmissions includes the following: In the multi-downlink control information scenario, the transmission interval K is configured after an uplink transmission sent to a target TRP and between two uplink transmissions where switching of a receiving TRP or a sending beam occurs.

In this embodiment of the present application, the transmission interval K may be configured between two uplink transmissions where the switching of a receiving TRP or a sending beam occurs and is configured only after the uplink transmission sent to the target TRP. For example, it is determined whether the switching of a receiving TRP or a sending beam occurs in the next transmission after the uplink transmission sent to the target TRP. If so, the transmission interval K is configured after the uplink transmission, and if not, the transmission interval K is not configured.

On the basis of the preceding embodiments of the present application, the target TRP has the minimum timing advance among multiple TRPs. The value of the transmission interval K is associated with at least one of the following information: the TCI state of the target TRP, the target timing advance, or the target higher-layer parameter CORESTPoolIndex. The target timing advance corresponds to the minimum timing advance value among the TRPs. The target higher-layer parameter is a CORESTPoolIndex value corresponding to the TRP having the minimum transmission delay among the TRPs.

The target TRP may have the minimum timing advance among multiple TRPs performing the uplink transmissions. The value of the transmission interval K is associated with at least one of the following information: a sending beam of the target TRP, a target timing advance, or a target higher-layer parameter CORESTPoolIndex, and the value of the transmission interval K may be configured by at least one of the preceding information. The target timing advance corresponds to the minimum timing advance value among the TRPs. The target higher-layer parameter is a CORESTPoolIndex value corresponding to the TRP having the minimum transmission delay among the TRPs.

In an example embodiment, FIG. 19 is an example diagram of another configuration method for information transmission according to an embodiment of the present application. Referring to FIG. 19, when K is an OFDM symbol, the length of data sent to TRP0 is 4 OFDM symbols, and the length of data sent to TRP1 is 2 OFDM symbols. TA0 corresponding to TRP0 is smaller than TA1 corresponding to TRP1. The first uplink transmission is sent to TRP0 and occupies symbols 0 to 4 in slot 0, and symbol 4 is configured as the transmission interval. The second uplink transmission is sent to TRP1 and occupies symbols 5 to 6 in slot 0.

On the basis of the preceding embodiments of the present application, configuring the transmission interval K between uplink transmissions includes the following: When two uplink transmissions are performed in the multi-downlink control information scenario, an uplink transmission with a larger timing advance in the two uplink transmissions is configured to be sent before an uplink transmission with a smaller timing advance in the two uplink transmissions.

When two uplink transmissions are performed, uplink data of the two uplink transmissions may be the same or different. When the transmission sequence of the uplink transmissions is configured, the uplink transmission with the larger timing advance is sent before the other uplink transmission with the smaller timing advance. When the uplink data of the two uplink transmissions is different, data with the larger timing advance is sent first, and data with the smaller timing advance is sent later. In this case, the transmission interval K does not need to be configured.

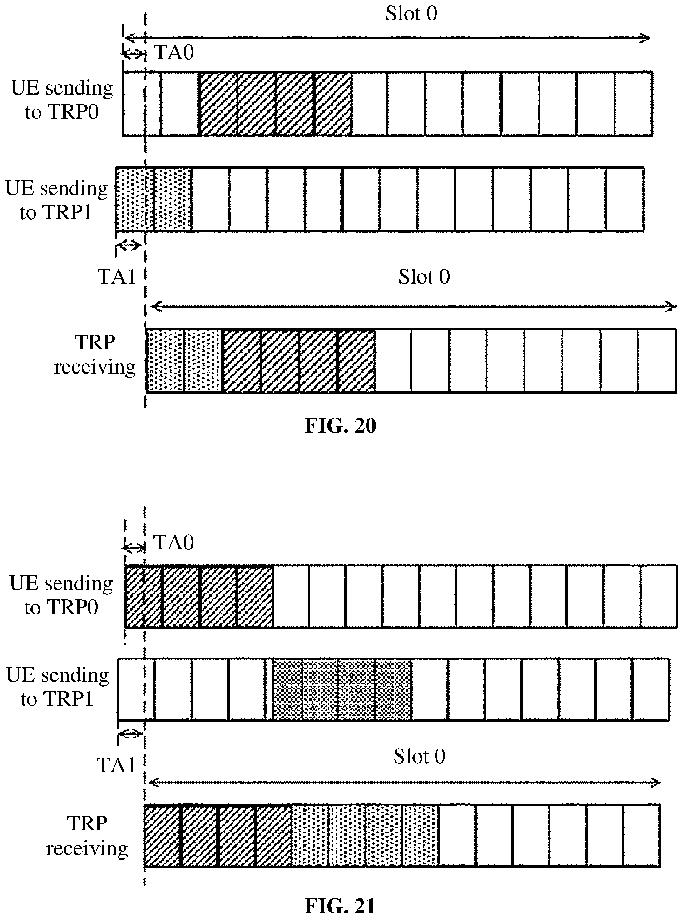

In an example embodiment, FIG. 20 is an example diagram of another configuration method for information transmission according to an embodiment of the present application. Referring to FIG. 20, the length of data sent to TRP0 is 4 OFDM symbols, and the length of data sent to TRP1 is 2 OFDM symbols. TA0 corresponding to TRP0 is smaller than TA1 corresponding to TRP1. The data of TRP1 corresponding to TA1 is sent first. The data sent to TRP0 occupies symbols 2 to 5 in slot 0. The data sent to TRP1 occupies symbols 0 to 1 in slot 0. No overlap occurs when the UE sends the data to the two TRPs.

On the basis of the preceding embodiments of the present application, configuring the transmission interval K between uplink transmissions includes the following: when at least two uplink transmissions are performed in the multi-downlink control information scenario, uplink transmissions from two TRPs are not configured to be sent immediately adjacently.

On the basis of the preceding embodiments of the present application, the transmission interval K is an interval time or the number of interval symbols determined according to the timing advance value.

On the basis of the preceding embodiments of the present application, when at least two uplink transmissions are performed, if the transmission interval K is not configured, and it is determined that an overlap occurs in the sending of uplink transmissions, the information length of an uplink transmission where the overlap occurs is shortened.

When the second transmission node performs at least two continuous uplink transmissions, if the transmission interval K is not configured during the sending of the uplink transmissions by the second transmission node, and it is determined that an uplink transmission overlap may occur at the sending end, the information length of the uplink transmission where in the overlapping part occurs and that is of the second transmission node as the sending end is shortened.

On the basis of the preceding embodiment of the present application, shortening the information length of the uplink transmission where the overlap occurs includes at least one of the following: The information length of the latter uplink transmission transmitted in the two transmissions where the overlapping part exists is shortened; the information length of the former uplink transmission transmitted in the two transmissions where the overlapping part exists is shortened; the information length of an uplink transmission having a lower priority in the two transmissions where the overlapping part exists is shortened; or the information lengths of uplink transmissions where the overlapping part exists and which are sent to different TRPs are shortened alternately.

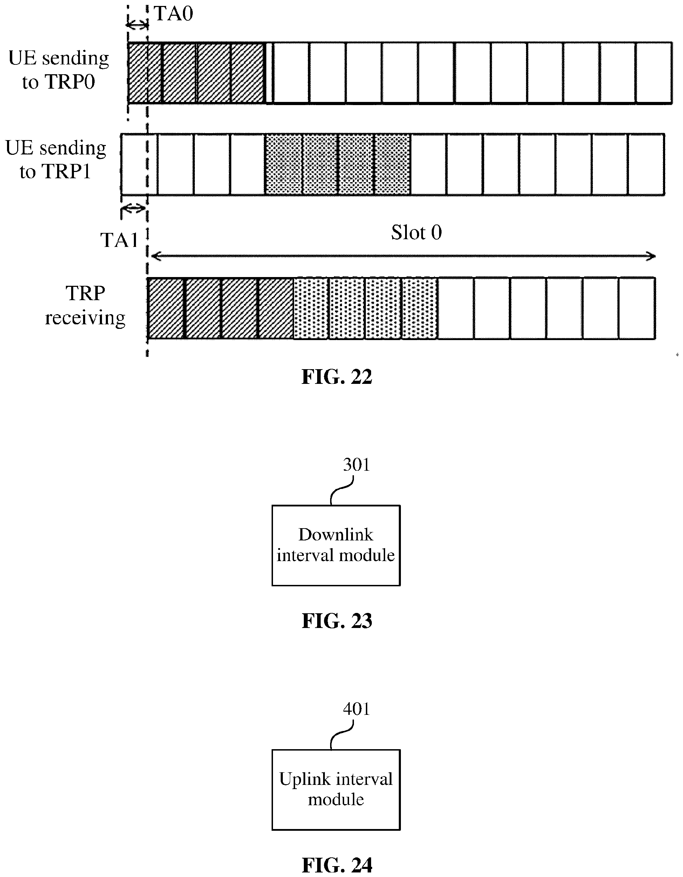

In this embodiment of the present application, the information length of the latter uplink transmission transmitted in the two overlapping transmissions may be shortened, and the length of the previously sent uplink transmission is not changed. FIG. 21 is an example diagram in which another information length is shortened according to an embodiment of the present application. Referring to FIG. 21, the information sent to TRP0 is sent before the information sent to TRP1, and the information length of the uplink transmission of TRP1 is shortened. Alternatively, the information length of the former uplink transmission transmitted in the two overlapping transmissions may be shortened. FIG. 22 is an example diagram in which another information length is shortened according to an embodiment of the present application. Referring to FIG. 22, the information sent to TRP0 is sent before the information sent to TRP1, and the information length of the uplink transmission of TRP0 is shortened.

FIG. 23 is a diagram illustrating the structure of a configuration method apparatus for information transmission according to an embodiment of the present application. The configuration method apparatus may perform the configuration method for information transmission according to any embodiment of the present application and may execute the corresponding functional modules and effects of the method. This apparatus may be implemented by software and/or hardware and includes a downlink interval module 301.

The downlink interval module 301 is used to configure a transmission interval K between downlink transmissions in a case of continuously transmitting at least two times of downlink information.

In this embodiment of the present application, when downlink data is transmitted multiple times through the downlink interval module 301, the transmission interval K for transmitting the downlink data is configured. The transmission interval K is used for multiple downlink transmissions. According to the transmission interval, the probability of overlap is reduced during multiple data transmissions in the multi-TRP scenario, the communication interference is reduced, and the network quality of wireless communications can be enhanced.

On the basis of the preceding embodiment of the present application, the downlink interval module 301 is configured to, in the single-downlink control information scenario, configure the transmission interval K between every two downlink transmissions.

On the basis of the preceding embodiment of the present application, the downlink interval module 301 is configured to, in the single-downlink control information scenario, configure the transmission interval K between two downlink transmissions where switching of a TRP or a TCI state occurs.

On the basis of the preceding embodiments of the present application, the downlink interval module 301 is configured to, in the single-downlink control information scenario, configure the transmission interval K after a downlink transmission sent by a target TRP and between two downlink transmissions where switching of a TRP or a TCI state occurs.

On the basis of the preceding embodiments of the present application, the target TRP in the downlink interval module 301 has the maximum transmission delay among multiple TRPs. The value of the transmission interval K is associated with at least one of the following information: the TCI state of the target TRP or a target timing advance. The target timing advance corresponds to the maximum timing advance value among the TRPs.

On the basis of the preceding embodiments of the present application, the downlink interval module 301 is configured to, in the single-downlink control information scenario, configure the transmission interval K before a downlink transmission sent by a target TRP and between two downlink transmissions where switching of a TRP or a TCI state occurs.

On the basis of the preceding embodiment of the present application, the target TRP in the downlink interval module 301 has the minimum transmission delay among multiple TRPs. The value of the transmission interval K is associated with at least one of the following information: the TCI state of the target TRP Value or a target timing advance. The target timing advance corresponds to the minimum timing advance value among the TRPs.

On the basis of the preceding embodiments of the present application, the downlink interval module 301 is configured to, in a case where two downlink transmissions are performed in the single-downlink control information scenario, configure one of the two downlink transmissions corresponding to a TRP with a smaller transmission delay to be sent before the other one of the two downlink transmissions corresponding to a TRP with a larger transmission delay.

On the basis of the preceding embodiments of the present application, the downlink interval module 301 is configured to, in the multi-downlink control information scenario, configure the transmission interval K before a downlink transmission of a target TRP and between two downlink transmissions where switching of a TRP or a TCI state occurs.

On the basis of the preceding embodiments of the present application, the target TRP in the downlink interval module 301 has the minimum transmission delay among multiple TRPs. The value of the transmission interval K is associated with at least one of the following information: the TCI state of the target TRP, the target timing advance, or a target higher-layer parameter CORESTPoolIndex. The target timing advance corresponds to the minimum timing advance value among the TRPs. The target higher-layer parameter is a CORESTPoolIndex value corresponding to the TRP having the minimum transmission delay among the TRPs.

On the basis of the preceding embodiments of the present application, the downlink interval module 301 is configured to, in the multi-downlink control information scenario, configure the transmission interval K after a downlink transmission sent by a target TRP and between two downlink transmissions where switching of a TRP or a TCI state occurs.

On the basis of the preceding embodiments of the present application, the target TRP in the downlink interval module 301 has the maximum transmission delay among multiple TRPs. The value of the transmission interval K is associated with at least one of the following information: the TCI state of the target TRP, the target timing advance, or the target higher-layer parameter CORESTPoolIndex. The target timing advance corresponds to the maximum timing advance value among the TRPs. The target higher-layer parameter is a CORESTPoolIndex value corresponding to the TRP having the maximum transmission delay among the TRPs.

On the basis of the preceding embodiments of the present application, the downlink interval module 301 is configured to, when two downlink transmissions are performed in the multi-downlink control information scenario, configure a downlink transmission with a smaller transmission delay in the two downlink transmissions to be sent before the other downlink transmission with a larger transmission delay in the two downlink transmissions.

On the basis of the preceding embodiments of the present application, the downlink interval module 301 is configured to, when at least two downlink transmissions are performed in the multi-downlink control information scenario, not configure downlink transmissions from two TRPs to be sent immediately adjacently.

On the basis of the preceding embodiments of the present application, the transmission interval K in the downlink interval module 301 is an interval time or the number of interval symbols determined according to the timing advance value.

On the basis of the preceding embodiments of the present application, the apparatus further includes a shortening module, which is configured to shorten the information length of a downlink transmission where an overlapping part exists, in a case where at least two downlink transmissions are performed, the transmission interval K is not configured, and if an overlap occurs when the second transmission node receives the transmissions.

On the basis of the preceding embodiments of the present application, the shortening module includes a first shortening unit, a second shortening unit, a third shortening unit, and a fourth shortening unit.

The first shortening unit is configured to shorten the information length of the latter downlink transmission transmitted in the two transmissions where the overlapping part exists. The second shortening unit is configured to shorten the information length of the former downlink transmission transmitted in the two transmissions where the overlapping part exists. The third shortening unit is configured to shorten the information length of a downlink transmission with a lower priority in the two transmissions where the overlapping part exists. The fourth shortening unit is configured to alternately shorten information lengths of downlink transmissions that are of different TRPs and where the overlapping part exists.

FIG. 24 is a diagram illustrating the structure of another configuration apparatus for information transmission according to an embodiment of the present application. The configuration apparatus may perform the configuration method for information transmission according to any embodiment of the present application and may execute the corresponding functional modules and effects of the method. This apparatus may be implemented by software and/or hardware and includes an uplink interval module 401.

The uplink interval module 401 is used to configure a transmission interval K between uplink transmissions in a case where uplink information is continuously transmitted at least two times.

In this embodiment of the present application, when uplink data is transmitted multiple times through the uplink interval module 401, the transmission interval K for transmitting the uplink data is configured. The transmission interval K is used for multiple uplink transmissions.

According to the transmission interval, the probability of overlap is reduced during multiple data transmissions in the multi-TRP scenario, the communication interference is reduced, and the network quality of wireless communications can be enhanced.

On the basis of the preceding embodiments of the present application, the uplink interval module 401 is configured to, in the single-downlink control information scenario, configure the transmission interval K between every two uplink transmissions.

On the basis of the preceding embodiments of the present application, the uplink interval module 401 is configured to, in the single-downlink control information scenario, configure the transmission interval K between two uplink transmissions where switching of a receiving TRP or a sending beam occurs.

On the basis of the preceding embodiments of the present application, the uplink interval module 401 is configured to, in the single-downlink control information scenario, configure the transmission interval K after an uplink transmission of a target TRP and between two uplink transmissions where switching of a receiving TRP or a sending beam occurs.

On the basis of the preceding embodiments of the present application, the target TRP in the uplink interval module 401 has the minimum timing advance among multiple TRPs. The value of the transmission interval K is associated with at least one of the following information: a sending beam of the target TRP or a target timing advance. The target timing advance corresponds to the minimum timing advance value among the TRPs.

On the basis of the preceding embodiments of the present application, the uplink interval module 401 is configured to, in the single-downlink control information scenario, configure the transmission interval K before an uplink transmission sent to a target TRP and between two uplink transmissions where switching of a receiving TRP or a sending beam occurs.

On the basis of the preceding embodiments of the present application, the target TRP in the uplink interval module 401 has the maximum timing advance among multiple TRPs. The value of the transmission interval K is associated with at least one of the following information: a sending beam of the target TRP or a target timing advance. The target timing advance corresponds to the maximum timing advance value among the TRPs.

On the basis of the preceding embodiments of the present application, the uplink interval module 401 is configured to, when two uplink transmissions are performed in the single-downlink control information scenario, configure an uplink transmission with a larger timing advance in the two uplink transmissions to be sent before the other uplink transmission with a smaller timing advance in the two uplink transmissions.

On the basis of the preceding embodiments of the present application, the uplink interval module 401 is configured to, in the multi-downlink control information scenario, configure the transmission interval K before an uplink transmission sent to a target TRP and between two uplink transmissions where switching of a receiving TRP or a sending beam occurs.

On the basis of the preceding embodiments of the present application, the target TRP in the uplink interval module 401 has the maximum timing advance among multiple TRPs. The value of the transmission interval K is associated with at least one of the following information: a sending beam of the target TRP, a target timing advance, or a target higher-layer parameter CORESTPoolIndex. The target timing advance corresponds to the maximum timing advance value among the TRPs. The target higher-layer parameter is a CORESTPoolIndex value corresponding to the TRP having the maximum timing advance among the TRPs.

On the basis of the preceding embodiments of the present application, the uplink interval module 401 is configured to, in the multi-downlink control information scenario, configure the transmission interval K after an uplink transmission sent to a target TRP and between two uplink transmissions where switching of a receiving TRP or a sending beam occurs.

On the basis of the preceding embodiments of the present application, the target TRP in the uplink interval module 401 has the minimum timing advance among multiple TRPs. The value of the transmission interval K is associated with at least one of the following information: a sending beam of the target TRP, a target timing advance, or a target higher-layer parameter CORESTPoolIndex. The target timing advance corresponds to the minimum timing advance value among the TRPs. The target higher-layer parameter is a CORESTPoolIndex value corresponding to the TRP having the minimum timing advance among the TRPs.

On the basis of the preceding embodiments of the present application, the uplink interval module 401 is configured to, when two uplink transmissions are performed in the multi-downlink control information scenario, configure an uplink transmission with a larger timing advance in the two uplink transmissions to be sent before the other uplink transmission with a smaller timing advance in the two uplink transmissions.

On the basis of the preceding embodiments of the present application, the uplink interval module 401 is configured to, when at least two uplink transmissions are performed in the multi-downlink control information scenario, not configure uplink transmissions from two TRPs to be sent immediately adjacently.

On the basis of the preceding embodiments of the present application, the transmission interval K in the uplink interval module 401 is an interval time or the number of interval symbols determined by the timing advance value.

On the basis of the preceding embodiments of the present application, the apparatus further includes a shortening module, which is configured to shorten the information length of an uplink transmission where an overlapping part occurs, in a case where at least two uplink transmissions are performed, and if the transmission interval K is not configured, and sending of the uplink transmissions is determined to have an overlap.

On the basis of the preceding embodiments of the present application, the shortening module includes a first shortening unit, a second shortening unit, a third shortening unit, and a fourth shortening unit.

The first shortening unit is configured to shorten the information length of the latter uplink transmission transmitted in the two transmissions where the overlapping part exists. The second shortening unit is configured to shorten the information length of an uplink transmission of the former transmission in the two transmissions where the overlapping part exists. The third shortening unit is configured to shorten the information length of an uplink transmission having a lower priority in the two transmissions where the overlapping part exists. The fourth shortening unit is configured to alternately shorten the information lengths of uplink transmissions which are sent to different TRPs and where the overlapping part exists.

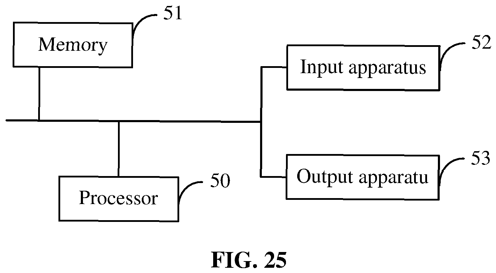

FIG. 25 is a diagram illustrating the structure of an electronic device according to an embodiment of the present application. As shown in FIG. 25, the electronic device includes a processor 50, a memory 51, an input apparatus 52, and an output apparatus 53. One or more processors 50 may be provided in the electronic device. One processor 50 is used as an example in FIG. 25. The processor 50, the memory 51, the input apparatus 52, and the output apparatus 53 may be connected through a bus or in other manners. In FIG. 25, the connection through a bus is used as an example.

As a computer-readable storage medium, the memory 51 may be configured to store a software program, a computer executable program, and a module, for example, the module corresponding to the configuration method apparatus for information transmission in the embodiment of the present application (the downlink interval module 301 or the uplink interval module 401). The processor 50 executes software programs, instructions, and modules stored in the memory 51 to perform function applications and data processing of the device, that is, to implement the preceding configuration method for information transmission.

The memory 51 may mainly include a program storage region and a data storage region. The program storage region may store an operating system and an application program required for at least one function. The data storage region may store data or the like created according to the use of the terminal. Additionally, the memory 51 may include a high-speed random-access memory and may also include a nonvolatile memory such as at least one disk memory, flash memory, or another nonvolatile solid-state memory. In some examples, the memory 51 may include memories which are remotely disposed relative to the processor 50, and these remote memories may be connected to the device via a network. Examples of the preceding network include, but are not limited to, the Internet, an intranet, a local area network, a mobile communication network, and a combination thereof.

The input apparatus 52 may be configured to receive inputted digital or character information and generate key signal input related to the user setting and function control of the device. The output apparatus 53 may include a display device such as a display screen.

Embodiments of the present application also provide a storage medium including computer-executable instructions. The computer-executable instructions, when executed by a computer processor, are configured to perform a configuration method for information transmission. The method includes the following:
In a case of transmitting at least two times of downlink information, a transmission interval K is configured between downlink transmissions. Alternatively, in a case of transmitting at least two times of uplink information, a transmission interval K is configured between uplink transmissions.

As for the storage medium including the computer-executable instruction, which is provided in the embodiment of the present application, the computer-executable instruction may implement not only the operation in the preceding method but also the related operations in the configuration method for information transmission provided in any embodiment of the present application.

All or part of the steps in the method and function modules/units in the system and device disclosed above may be implemented as software, firmware, hardware and appropriate combinations thereof.

In the hardware implementation, the division of the function modules/units in the preceding description may not correspond to the division of physical components. For example, one physical component may have multiple functions, or one function or step may be performed cooperatively by multiple physical components. Some or all physical components may be implemented as software executed by a processor such as a central processing unit, a digital signal processor, or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). The term computer storage media include volatile and nonvolatile as well as removable and non-removable media implemented in any method or technology for storage of information (such as computer-readable instructions, data structures, program modules, or other data). The computer storage media include, but are not limited to, a random-access memory (RAM), a read-only memory (ROM), an electrically erasable programmable read-only memory (EEPROM), a flash memory, or another memory technology, a compact disc read-only memory (CD-ROM), a digital versatile disc (DVD), or another optical disc storage, a magnetic cassette, a magnetic tape, disk storage, or another magnetic storage device, or any other medium used for storing desired information and accessible by a computer. The communication media generally include computer-readable instructions, data structures, program modules, or other data in modulated data signals such as a carrier wave or other transport mechanisms and may include any information delivery medium.

## Claims

1. A configuration method for information transmission, being applied to a first transmission node and comprising:
in a case of continuously transmitting at least two times of downlink information, configuring a transmission interval K between at least two downlink transmissions.

2. The method of claim 1, wherein configuring the transmission interval K between the at least two downlink transmissions comprises:
in a single-downlink control information scenario, configuring the transmission interval K between every two of the at least two downlink transmissions.

3. The method of claim 1, wherein configuring the transmission interval K between the at least two downlink transmissions comprises:
in a single-downlink control information scenario, configuring the transmission interval K between two downlink transmissions where switching of a transmission and reception point, TRP, or a transmission configuration indicator, TCI, state occurs.

4. The method of claim 1, wherein configuring the transmission interval K between the at least two downlink transmissions comprises:
in a single-downlink control information scenario, configuring the transmission interval K after a downlink transmission sent by a target TRP and between two downlink transmissions where switching of a TRP or a TCI state occurs.

5. The method of claim 4, wherein the target TRP is a TRP having a maximum transmission delay among a plurality of TRPs, and a value of the transmission interval K is associated with at least one of the following information: a TCI state of the target TRP or a target timing advance, wherein the target timing advance is a timing advance corresponding to a maximum timing advance value among the plurality of TRPs.

6. The method of claim 1, wherein configuring the transmission interval K between the at least two downlink transmissions comprises:
in a single-downlink control information scenario, configuring the transmission interval K before a downlink transmission sent by a target TRP and between two downlink transmissions where switching of a TRP or a TCI state occurs.

7. The method of claim 6, wherein the target TRP is a TRP having a minimum transmission delay among a plurality of TRPs, and a value of the transmission interval K is associated with at least one of the following information: a TCI state of the target TRP or a target timing advance, wherein the target timing advance is a timing advance corresponding to a minimum timing advance value among the plurality of TRPs.

8. The method of claim 1, wherein configuring the transmission interval K between the at least two downlink transmissions comprises:
in a case where two downlink transmissions are performed in a single-downlink control information scenario, configuring one of the two downlink transmissions corresponding to a TRP with a smaller transmission delay to be sent before another one of the two downlink transmissions corresponding to a TRP with a larger transmission delay.

9. The method of claim 1, wherein configuring the transmission interval K between the at least two downlink transmissions comprises:
in a multi-downlink control information scenario, configuring the transmission interval K before a downlink transmission sent by a target TRP and between two downlink transmissions where switching of a TRP or a TCI state occurs.

10. The method of claim 9, wherein the target TRP is a TRP having a minimum transmission delay among a plurality of TRPs, and a value of the transmission interval K is associated with at least one of the following information: a TCI state of the target TRP, a target timing advance, or a target higher-layer parameter, a control resource set pool index, CORESTPoolIndex, wherein the target timing advance is a timing advance corresponding to a minimum timing advance value among the plurality of TRPs, and the target higher-layer parameter is a CORESTPoolIndex value corresponding to the TRP having the minimum transmission delay among the plurality of TRPs.

11. The method of claim 1, wherein configuring the transmission interval K between the at least two downlink transmissions comprises:
in a multi-downlink control information scenario, configuring the transmission interval K after a downlink transmission sent by a target TRP and between two downlink transmissions where switching of a TRP or a TCI state occurs.

12. The method of claim 11, wherein the target TRP is a TRP having a maximum transmission delay among a plurality of TRPs, and a value of the transmission interval K is associated with at least one of the following information: a TCI state of the target TRP, a target timing advance, or a target higher-layer parameter CORESTPoolIndex, wherein the target timing advance is a timing advance corresponding to a maximum timing advance value among the plurality of TRPs, and the target higher-layer parameter is a CORESTPoolIndex value corresponding to the TRP having the maximum transmission delay among the plurality of TRPs.

13. The method of claim 1, wherein configuring the transmission interval K between the at least two downlink transmissions comprises:
in a case where two downlink transmissions are performed in a multi-downlink control information scenario, configuring one of the two downlink transmissions corresponding to a TRP with a smaller transmission delay to be sent before another one of the two downlink transmissions corresponding to a TRP with a larger transmission delay.

14. The method of claim 1, wherein configuring the transmission interval K between the at least two downlink transmissions comprises:
in a case where the at least two downlink transmissions are performed in a multi-downlink control information scenario, not configuring downlink transmissions from two TRPs to be sent immediately adjacently.

15. The method of claim 1, wherein the transmission interval K is an interval time or a number of interval symbols determined according to a timing advance value.

16. The method of claim 1, further comprising:
in a case where the at least two downlink transmissions are performed, the transmission interval K is not configured, and an overlap occurs when a second transmission node receives the at least two downlink transmissions, shortening an information length of a downlink transmission which is of the first transmission node and where an overlapping part occurs.

17. The method of claim 16, wherein shortening the information length of the downlink transmission which is of the first transmission node and where the overlapping part occurs comprises at least one of the following:
shortening an information length of a latter downlink transmission transmitted in two transmissions where the overlapping part exists;
shortening an information length of a former downlink transmission transmitted in two transmissions where the overlapping part exists;
shortening an information length of a downlink transmission with a lower priority in two transmissions where the overlapping part exists; and
alternately shortening information lengths of downlink transmissions that are of different TRPs and where the overlapping part exists.

18. A configuration method for information transmission, being applied to a second transmission node and comprising:
in a case of continuously transmitting at least two times of uplink information, configuring a transmission interval K between at least two uplink transmissions.

19. The method of claim 18, wherein configuring the transmission interval K between the at least two uplink transmissions comprises:
in a single-downlink control information scenario, configuring the transmission interval K between every two of the at least two uplink transmissions.

20. The method of claim 18, wherein configuring the transmission interval K between the at least two uplink transmissions comprises:
in a single-downlink control information scenario, configuring the transmission interval K between two uplink transmissions where switching of a receiving transmission and reception point, TRP, or a sending beam occurs.

21. The method of claim 18, wherein configuring the transmission interval K between the at least two uplink transmissions comprises:
in a single-downlink control information scenario, configuring the transmission interval K after an uplink transmission sent to a target TRP and between two uplink transmissions where switching of a receiving TRP or a sending beam occurs.

22. The method of claim 21, wherein the target TRP is a TRP having a minimum timing advance among a plurality of TRPs, and a value of the transmission interval K is associated with at least one of the following information: a sending beam of the target TRP or a target timing advance, wherein the target timing advance is a timing advance corresponding to a minimum timing advance value among the plurality of TRPs.

23. The method of claim 18, wherein configuring the transmission interval K between the at least two uplink transmissions comprises:
in a single-downlink control information scenario, configuring the transmission interval K before an uplink transmission sent to a target TRP and between two uplink transmissions where switching of a receiving TRP or a sending beam occurs.

24. The method of claim 23, wherein the target TRP is a TRP having a maximum timing advance among a plurality of TRPs, and a value of the transmission interval K is associated with at least one of the following information: a sending beam of the target TRP or a target timing advance, wherein the target timing advance is a timing advance corresponding to a maximum timing advance value among the plurality of TRPs.

25. The method of claim 18, wherein configuring the transmission interval K between the at least two uplink transmissions comprises:
in a case where two uplink transmissions are performed in a single-downlink control information scenario, configuring an uplink transmission having a larger timing advance in the two uplink transmissions to be sent before an uplink transmission having a smaller timing advance in the two uplink transmissions.

26. The method of claim 18, wherein configuring the transmission interval K between the at least two uplink transmissions comprises:
in a multi-downlink control information scenario, configuring the transmission interval K before an uplink transmission sent to a target TRP and between two uplink transmissions where switching of a receiving TRP or a sending beam occurs.

27. The method of claim 26, wherein the target TRP is a TRP having a maximum timing advance among a plurality of TRPs, and a value of the transmission interval K is associated with at least one of the following information: a sending beam of the target TRP, a target timing advance, or a target higher-layer parameter, a control resource set pool index. CORESTPoolIndex, wherein the target timing advance is a timing advance corresponding to a maximum timing advance value among the plurality of TRPs, and the target higher-layer parameter is a CORESTPoolIndex value corresponding to the TRP having the maximum timing advance among the plurality of TRPs.

28. The method of claim 18, wherein configuring the transmission interval K between the at least two uplink transmissions comprises:
in a multi-downlink control information scenario, configuring the transmission interval K after an uplink transmission sent to a target TRP and between two uplink transmissions where switching of a receiving TRP or a sending beam occurs.

29. The method of claim 28, wherein the target TRP is a TRP having a minimum timing advance among a plurality of TRPs, and a value of the transmission interval K is associated with at least one of the following information: a sending beam of the target TRP, a target timing advance, or a target higher-layer parameter CORESTPoolIndex, wherein the target timing advance is a timing advance corresponding to a minimum timing advance value among the plurality of TRPs, and the target higher-layer parameter is a CORESTPoolIndex value corresponding to the TRP having the minimum timing advance among the plurality of TRPs.

30. The method of claim 18, wherein configuring the transmission interval K between the at least two uplink transmissions comprises:
in a case where two uplink transmissions are performed in a multi-downlink control information scenario, configuring an uplink transmission having a larger timing advance in the two uplink transmissions to be sent before an uplink transmission having a smaller timing advance in the two uplink transmissions.

31. The method of claim 18, wherein configuring the transmission interval K between the at least two uplink transmissions comprises:
in a case where the at least two uplink transmissions are performed in a multi-downlink control information scenario, not configuring uplink transmissions from two TRPs to be sent immediately adjacently.

32. The method of claim 18, wherein transmission interval K is an interval time or a number of interval symbols determined according to a timing advance value.

33. The method of claim 18, further comprising:
in a case where the at least two uplink transmissions are performed, the transmission interval K is not configured, and an overlap occurs in sending of the at least two uplink transmissions, shortening an information length of an uplink transmission in a part where the overlap occurs.

34. The method of claim 33, wherein shortening the information length of the uplink transmission in a part where the overlap occurs comprises at least one of the following:
shortening an information length of a latter uplink transmission transmitted in two transmissions where the overlapping part exists;
shortening an information length of a former uplink transmission transmitted in two transmissions where the overlapping part exists;
shortening an information length of an uplink transmission with a lower priority in two transmissions where the overlapping part exists; and
alternately shortening information lengths of uplink transmissions that are sent to different TRPs and where the overlapping part exists.

35. An electronic device, comprising:
at least one processor configured to perform the configuration method for information transmission of any one of claims 1 to 17 or claims 18 to 34.

36. A computer-readable storage medium, storing a computer program which, when executed by a processor, causes the processor to perform the configuration method for information transmission of any one of claims 1 to 17 or claims 18 to 34.
